Europäisches Patentamt

**European Patent Office**

**Office européen des brevets**

(11) Publication number: **0 009 899**
**B1**

(12) **EUROPEAN PATENT SPECIFICATION**

(45) Date of publication of patent specification: **20.10.82**

(51) Int. Cl.³: **F 41 G 7/26, G 02 B 27/17**

(21) Application number: **79301855.7**

(22) Date of filing: **10.09.79**

(54) A projector for projecting electromagnetic control signals.

(30) Priority: **05.10.78 US 948927**

(43) Date of publication of application:
**16.04.80 Bulletin 80/8**

(45) Publication of the grant of the patent:
**20.10.82 Bulletin 82/42**

(84) Designated Contracting States:
**BE CH DE FR GB NL SE**

(56) References cited:
**DE - A - 2 441 771**
**GB - A - 1 512 405**
**US - A - 4 111 384**

(73) Proprietor: **FORD AEROSPACE &**
**COMMUNICATIONS CORPORATION**
**300 Renaissance Center P.O. Box 43339**
**Detroit, Michigan 48243 (US)**

(72) Inventor: **Stewart, Jr., George William**
**2872 Stromboli Road**
**Costa Mesa California 92626 (US)**

(74) Representative: **Crawford, Andrew Birkby et al,**
**A.A. THORNTON & CO. Northumberland House**
**303-306 High Holborn**
**London WC1V 7LE (GB)**

Courier Press, Leamington Spa, England.

# A projector for projecting electromagnetic control signals

The present invention relates to the field of information transmission employing an electromagnetic beam projector which supplies coordinate reference information to a remote receiver. More specifically, the present invention relates to a projector of a type comprising:

means for selectively generating a beam of radiation having a generally rectangular cross-sectional area;

means located to receive said beam of radiation for scanning said beam over at least one predetermined path orthogonal to the length of said beam cross-section; and

means located in the path of said scan beam for projecting said beam as two alternately scanned beams having said cross-sectional length dimensions orthogonally oriented with respect to each other.

In U.S. Patent No. 3,398,918 two embodiments of optical systems are proposed for guiding projectiles. In the first embodiment, four fan-shaped beams are independently modulated and projected towards a target and thereby form four optical walls of a pyramidal corridor for guiding projectiles. The size of the downrange corridor is controlled by a servo driven zoom lens arrangement. A projectile launched into this system tends to guide itself by bouncing around inside the corridor. In the second embodiment, a proportional guidance system provides two perpendicularly oriented beams which sweep in directions perpendicular to each other in order to direct the projectile. In the second embodiment, the two beams are derived from a single light source and optically divided, respectively modulated and projected by a controlled zoom lens type system wherein the optical elements are physically reoriented with respect to each other.

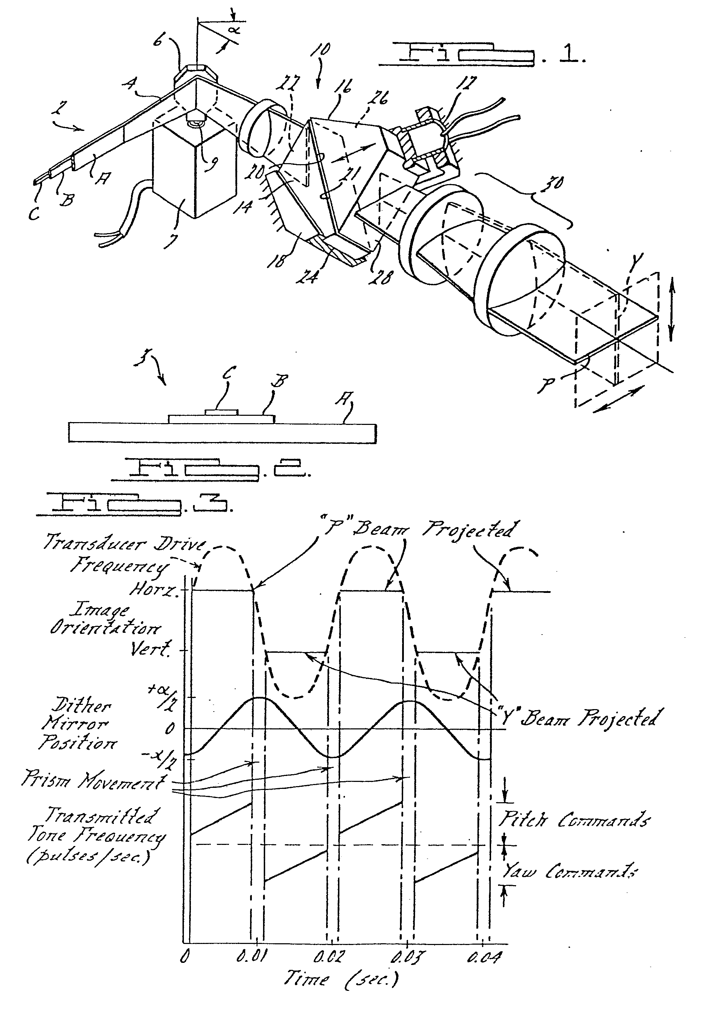

G.B. Patent No. 1,512,405 discloses a device for projecting a narrow optical radiation beam that is swept backwards and forwards over a predetermined angular sector symmetrical on either side of a sight line from the projecting device towards a target. Figure 1 of the patent illustrates the use of a rotating glass disc having non-parallel planar side surfaces and means for generating a narrow beam which is incident onto one side of the glass disc. A reflecting prism is located on the opposite side of the glass disc and receives the incident light refracted through the glass disc at an adjacent location and at the same angle of incidence as it was received by the prism. The rotation of the glass disc causes lateral scanning of the beam projected from the device.

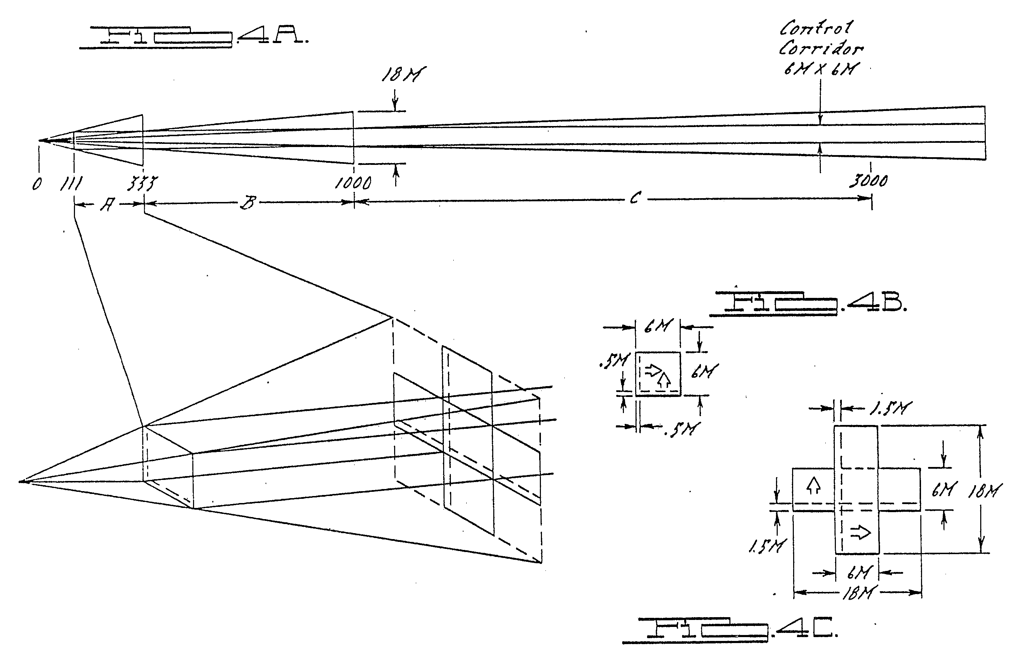

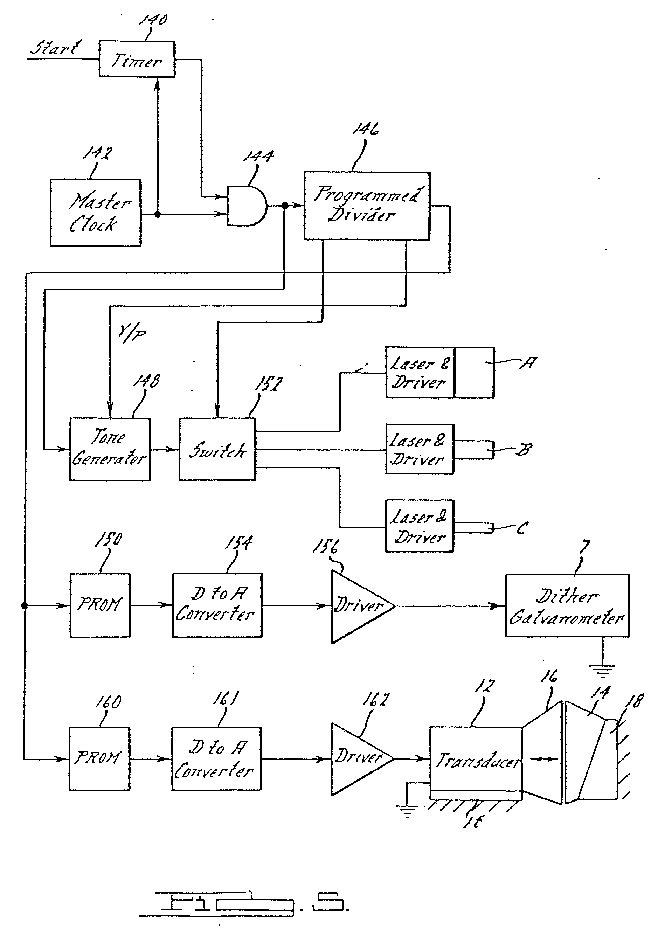

Figure 4 of the GB patent 1,512,405 illustrates a technique for projecting a pair of modulated beams from a single light source of either unpolarized light of circularly polarized light. The beam from the source is transmitted to a parallel displacement prism where it is separated into two beams having polarization planes mutually at right angles. The individual beams are then directed through the rotating glass disc and reflected by orthogonally oriented 90° reflecting prisms and redirected back through the glass disc to an optical system which combines the beams for parallel projectional along a common direction.

U.S. Patent No. 4,111,384 is directed to a scanner device for laser beam rider guidance systems wherein several embodiments are illustrated that may be used to effect a lateral scanning of a beam over its projection path.

An improved electromagnetic radiation beam projector which eliminates the zoom lens system of the prior art and achieves more accurate control of the beam size projected in accordance with a time function has been proposed in our European Patent Application No. 78300729.7 (Pub. No. 0002576 A1). This projector is used, for instance, in a beam rider missile system, wherein the missile or projectile contains tail sensors which utilize the projected beam of radiation as a means of controlling its directional flight. By determining its relative location within the cross-section of a projected beam pattern, the missile responds by steering itself to seek the centre of the beam pattern. In order to control the flight path of a missile having a known flight profile (distance from launch versus time), it projects a matrix pattern so that the cross-sectional area of information is maintained constant over the known flight profile.

The projected scan pattern is formed by two alternately scanned and orthogonally oriented beams of radiation which are pulse modulated over respective predetermined ranges of pulse rates to present a plurality of measurable pulse rates at predetermined relative coordinates, termed "bins", within the defined matrix.

A first beam, having a predetermined rectangular cross-sectional area, is projected so that its length dimension is horizontal to a reference and is vertically scanned over a predetermined number of rate values within a first predetermined range of rates during its vertical scan over the predetermined angle.

A second beam, having the same predetermined rectangular cross-sectional area as the first beam is, in alternation with the first beam, oriented vertically with respect to the aforementioned reference and is scanned horizontally over the same predetermined angle to cover an area common to the vertically scanned area of the first beam. The second beam is also pulse modulated at a predetermined number of different rate values within a second predetermined range of rates during its horizontal scan over the predetermined angle.

As a result, a matrix information pattern is projected which has a number of detectable bins corresponding to a particular vertical scan pulse rate and a horizontal scan pulse rate. For example, where the scanned beams are each pulse modulated at 51 different frequencies, 2,601 bins are defined in the matrix. In addition, since the scan beams are each pulse modulated over separate ranges (e.g., 10.460—11.682 KHz for the vertical scan and 13.089—15.060 KHz for the horizontal scan), a discriminative receiver within the matrix can readily determine its position in that pattern.

While the apparatus proposed in our earlier European Patent Application No. 78300729.7 (Pub. No. 0002576 A1) provides good control of the missile it would be preferable to reduce the number of parts used in the apparatus and particularly the number of mechanically movable parts.

The present invention therefore provides a projector for projecting electromagnetic control signals comprising:

a beam rotator which includes first and second relatively movable prism elements, movement of one of said elements with respect to the other of said elements effecting a rotation of the beam;

means for effecting relative movement of said prism elements between a first state where said prism elements are evenly separated over opposing major optical transmitting faces and a second state where said prism elements are in optical contact along said opposite major faces; and circuitry for driving said movement effecting means at a frequency corresponding to the scan frequency.

The beam projector achieves beam rotation and derotation by utilizing principals of frustrated total internal reflection with a plurality of prism elements. Preferably, the beam rotator comprises a vibrationally modulated Pechan-type prism to alternate the orthogonal orientation and scan directions of the beams prior to projection. The frequency of modulation is the same frequency as applied to the dither mirror and causes the two prism elements defining the Pechan-type prism to synchronously make and break contact along opposing facing surfaces once each cycle.

In the disclosed embodiment which is a modification of the embodiment shown in Fig. 1 of our above-mentioned application, a single source of radiation is employed consisting of three selectively driven lasers which are individually coupled to corresponding fibre optic systems cross-sectionally formatted to deliver radiation in any of three separately selectable cross-sectional densities. In this single source of radiation, the lasers are individually and selectively driven so that only one is on at a time. Therefore, the output of the single source of radiation has a selectable cross-sectional density and is a key factor in eliminating the need for variable optical systems (zoom lenses) of the prior art.

Radiation, emitted from the single source, is fed to a scanning means such as a dither mirror which provides lateral scanning movement of the generally rectangular cross-sectional radiation over predetermined angles at a fixed scan frequency. The scanned radiation is then fed to an improved beam rotator optical projection system, wherein, in synchronization with the scanning dither mirror, the beam is projected as two beams which are alternately scanned in orthogonal directions and orthogonally oriented with respect to each other to provide respective pitch and yaw information.

In order that the present invention be more readily understood an embodiment thereof will now be described by way of example with reference to the accompanying drawings, in which:—

Figure 1 illustrates an embodiment of the present invention utilizing a single source of radiation and a modulated frustrated total internal reflection type beam rotator in a fixed focal length lens system for effecting alternate transmission of two orthogonally oriented beams;

Figure 2 illustrates the proportionately differing cross-sections of the radiation which are selectively transmitted by the radiation generating means shown in Figure 1;

Figure 3 illustrates various control operations occurring over a period of time;

Figure 4A is a schematic illustration of the various parameters considered in the projection of the controlled radiation pattern over a typical flight path of a missile;

Figure 4B is a schematic illustration of the scanning pattern of the alternately projected beams of radiation at the low end of the range of the correspondingly selected light source;

Figure 4C is a schematic representation of the light beam pattern at the extreme end of the radiation scan pattern for the selected radiation source; and

Figure 5 is a block diagram illustrating an electrical control system for use in the embodiment of the present invention.

In Figures 4A, 4B and 4C, a projected guidance pattern is illustrated over a hypothetical control range of approximately 3000 metres. The embodiment of the present invention is described herein with respect to this exemplified range of control. However, it should be understood that in each instance where specific measurements are given, in order to illustrate particular design parameters, such measurements are not restrictive of the scope of the present invention.

The embodiment of the present invention is shown in Figure 1, wherein pitch (P) and yaw (Y) information beams of radiation are alternately projected from a beam projector utilizing a single source of radiation 2. The source 2 comprises three Ga-As lasers, the outputs of which are fed to a beam shaper. In the present case, the lasers are optically interfaced to clad glass optical fibres in an assembly 3 (shown in Figure 2). It is desired to produce beams which have a cross-section greater in one dimension than in the other. This is most conveniently done by using rectangular optical fibres or a bundle of optical fibres in a rectangular array. The clad glass fibre assembly 3 has three separate rectangular channels for conducting radiation from a correspondingly associated laser generator. Each rectangular channel A, B and C has a proportionately different cross-sectional area but each has the same shape and aspect ratio for transmitting a beam 4 of oblong cross-section and of a size in accordance with the particular individual laser which is selectively driven. In this embodiment, only one laser is driven at a time, in order to transmit a single beam having a desired cross-sectional size.

A dither mirror 6, mounted on a shaft 9, interrupts the beam 4 transmitted from the source 2 and reflectively scans the beam over a predetermined angle $\alpha$ in a direction orthogonal to the length dimension of the rectangular cross-section of the beam 4. The shaft 9 is rotated for sinusoidal oscillatory motion through the predetermined angle $\alpha$ about an axis, which interrupts the path of beam 4, by a controlled galvanometer 7. The galvanometer 7 is controlled using the apparatus shown in Figure 5 which will be described in more detail later.

A prismatic beam rotator 10 interrupts the beam 4 after it is reflected from the dither mirror 6 and focused by a lens. The beam rotator 10 is shown as a Pechan-type prism having its reversion axis at 45° with respect to the length dimension of the incoming beam 4. The rotator 10 comprises a receiving element 14 and a transmitting element 16. The receiving element 14 of the rotator 10 is rigidly mounted on a base 18, in common with all the other fixed elements of the system, to receive the incoming beam 4 at its unsilvered receiving face 22. Transmitting element 16 is mounted for reciprocating movement towards and away from a major unsilvered face 20 of the receiving element 14 by a vibrational transducer 12. The beam rotator 10 has two states which are dependent upon the relative locations of the two prism elements.

In the first state, the beam rotator 10 functions as a Pechan prism. The two prism elements 14 and 16 are evenly separated along their opposing unsilvered major faces 20 and 21 so that the vertically oriented beam entering the receiving face 22 of element 14 is internally reflected at major face 20, to a silvered face 24 and back to the major face 20 where it is normally incident. The beam exits major face 20 of the receiving element 14 and enters opposing major face 21 of transmitting element 16. The beam is then internally reflected from an exit face 28 to a silvered face 26, to major face 21 where it is internally reflected normal to the exit face 28 and transmitted as a horizontally oriented P beam rotated by 90° with respect to the incoming beam.

In the second state, the beam rotator 10 functions as a transmission window. The two prism elements 14 and 16 are in optical contact along their opposing major faces 20 and 21 to frustrate internal reflection at those faces. Therefore, the vertically oriented beam entering the receiving face 22 passes directly through the element 14, the contacting major surfaces 20 and 21, and exits unsilvered face 28 of the transmitting element 16 as a vertically oriented beam. In the second state, the orientation of the beam is unaffected. This vertically oriented beam is projected by a fixed focal length lens system 30 as a Y information beam oriented 90° with respect to the P beam (first state).

Operation of the embodiment is explained by referring to Figure 3. A single laser in source 2 is synchronously tone modulated to transmit a beam 4 which is generally vertical with respect to a reference plane. At the beginning of the time cycle, the dither mirror 6 is at an extreme point of the predetermined scanned angle $\alpha$ and commences its rotational motion through that angle. It is assumed for the sake of this example that the mirror oscillates at 50 Hz and for the 50 Hz time cycles in Figure 3, the P beam is shown as being projected first. Therefore, during the first half cycle of the oscillatory rotation of the dither mirror 6, through the predetermined angle $\alpha$, the major surfaces 20 and 21 of the rotator 10 are separated to effect rotation of the beam 4. Also during the period of the first half cycle that the dither mirror 6 is rotated, the selected laser of source 2 is pulse modulated over a first range of frequencies. Therefore, a P beam having a relatively horizontally oriented cross-section and continually changing pulse modulation frequency is projected and scanned in a relatively vertical direction.

When the dither mirror 6 reaches the limit of its first half cycle of angular rotation, a dead period of image rotation is provided, of approximately 2.5 mS, wherein the selected laser is not modulated and the major surfaces 20 and 21 are moved into contact with each other to frustrate internal reflection and transmit the unrotated beam. The dither mirror 6 then synchronously begins rotation in its second half cycle of oscillatory rotation through the predetermined angle $\alpha$. During that second half cycle, the selected laser is pulse modulated over a second range of frequencies and the beam is transmitted, without rotation, through the beam rotator 10. Therefore, the Y beam is projected having a relatively vertically oriented cross-section and is scanned in a relatively horizontal direction.

It is contemplated that the embodiments of the present invention have particular application in missile guidance systems, wherein the missile has a receiver with appropriate demodulation and logic electronics on board so as to enable the missile to respond to information received from the radiated beams. By identifying the two received pulse frequencies for the respectively received P and Y beams, the receiver will be able to determine the missile location within the projected pattern and command certain steering corrections to the missile. In Figures 4A, 4B and 4C, the projected information pattern is conceptually illustrated as an aid in describing the desired objectives obtained by the embodiments of the present invention.

Figure 4A illustrates a hypothetical flight range of 3000 metres for a hypothetical missile which is to be guided by this system. Guidance is programmed to begin when the missile is 111 metres down-range from the beam projector of the present invention. The system also requires, in this embodiment, that the missile move away from the beam projector along the line-of-sight path connecting the beam projector and the missile. Guidance of the missile continues as long as the missile receives guidance information. In this case, 3000 metres is the known maximum range of the missile, and therefore, the maximum range necessary for effective control of the projected information pattern.

From knowledge of the velocity profile of the missile, during the time the missile is predicted to be in the range from 111 metres to 333 metres, the laser associated with the clad glass rectangular fibre A, shown in Figure 2, is selected for pulse modulation. In this example, the rectangular fibre A has cross-sectional dimensions of 2.76 mm by 0.23 mm and an aspect ratio of 12:1. From this and one's knowledge of the other parts of the projector, it can be calculated that the resultant projected P beam cross-section measures 6 metres wide and 0.5 metres high at a range of 111 metres. When the P beam is at its lowest point of vertical scan at 111 metres it appears 3 metres below the optical axis of the projector. The P beam scans upward (see Figure 4B) for 7.5 mS over a distance of 6 metres and then disappears. During this upward scan of the P beam, it is modulated over the first range at 51 different pulse rates in order to define 51 detectable levels within the projected pattern.

Approximately 2.5 mS after the P beam disappears, the Y beam is projected having the same dimensions as the P beam. As referenced by looking from the projector, the Y beam appears 3 metres to the left of the optical axis, at 111 metres down-range, and is scanned 6 metres in the right direction over the next 7.5 mS. During that scan period of 7.5 mS, the Y beam is pulse modulated at 51 different pulse rates in the second range, which is different from the first range of pulse rates for P beam modulation. Therefore, the combination of P and Y beams being swept across a common area in space defines 2601 separate bins of detectable information in a 51 × 51 matrix format, wherein the centre bin corresponds to the optical axis of the projector and desired path of the missile.

It is most important to control the size of the scan pattern over the flight of the missile in order to communicate the same relative location information to the missile regardless of its down-range position. For example, if the missile is 1 metre below and 3 metres to the left of the optic axis, when it is 111 metres down-range, it receives pitch and yaw information corresponding to the particular bin located 1 metre below and 3 metres to the left of the optic axis bin. Therefore, since the objective is to provide a constant sized area of information with respect to the flight path profile, the missile will receive the same bin of pitch and yaw information indicated above at any down-range location where the missile is 1 metre below and 3 metres to the left of the optic axis. Of course, the same holds true for all the other information bins located within the projected pattern of information.

The apparatus maintains a constant sized area of information with respect to the predicted flight path function of down-range distance versus time, by varying the dither mirror scan angle $\alpha$ over a predetermined down-range distance d(t). Therefore, during the time the missile is predicted to be moving down-range, the dither mirror 6 is scanned over angle

$$\alpha = \text{Arctan} \frac{h}{d(t)},$$

where h represents the maintained square scan pattern height (and width) of 6 metres. By the time the missile reaches 333 metres, one can calculate that the projected beams have diverged to have a length dimension of 18 metres and a width dimension of 1.5 metres, as is shown in Figure 4C, by controlling the dither mirror scan angle $\alpha$. Since the beam width derived from the fibre A is so large at 333 metres, the laser associated with fibre A is turned off and the laser behind smaller fibre B is turned on.

The cross-sectional size of the fibre B is 0.914 mm × 0.076 mm, and also has an aspect ratio of 12:1. Therefore, the P and Y beam rectangular cross-sections derived from fibre B at 333 metres are 6 metres × 0.5 metres, as shown in Figure 4B, and are scanned over the continually decreasing angle $\alpha$ until the missile distance is predicted to be at 1000 metres. At that point, the P and Y beam cross-sections are the size indicated in Figure 4C with a 6 × 6 metre scan pattern size.

At 1000 metres, the laser behind fibre B is turned off, the laser behind smaller fibre C is turned on and is approxiately modulated. The fibre C has dimensions of 0.305 mm × 0.025 mm and also has an aspect ratio of 12:1. At 1000 metres, the P and Y projected beams from the C fibre have dimensions of 6 metres × 0.5 metres, as shown in Figure 4B. The beam cross-sections continue to diverge and at 3000 metres they reach dimensions, as shown in Figure 4C. This is the effective range but it could be extended using further lasers and beam shapers.

The block diagram shown in Figure 5 is illustrative of how the apparatus is controlled to obtain the desired results.

A master clock 142 generates a train of high frequency pulses to provide accurate timing for the various programmed functions. The output of the master clock 142 is fed to a timer-counter 140, which is preset for the particular missile flight path profile. After a missile fire "start" signal is received, the timer-counter 140 predicts when the missile is at 111 metres down-range and outputs an enabling signal to AND gate 144. At that point, AND gate 144 is enabled to gate pulses from the master clock 142. Gated signals from the AND gate 144 are fed to a programmed divider 146 and to a tone generator 148. The programmed divider 146 is configured to output command signals at predetermined times along the known flight path in order to effect synchronization of proper laser selection, laser modulation, dither mirror scan, and beam rotation. An output of the programmed divider 146 is fed to a PROM 150 which functions as a sine wave look-up table and provides a digital output in response to the count input address. The output of the PROM 150 is fed to a D to A converter 154 where the digital values are converted to a variably controlled amplitude 50 Hz analog sine wave. The analog since wave is amplified by driver 156 and controls the angular movement of the dither mirror through dither galvanometer 7.

The output of the programmed divider fed to the PROM 150 is also fed to a PROM 160, which functions as a sine wave look-up table and provides a digital response to the count input address. The output of the PROM 160 is fed to a D to A converter 161 where the digital values are converted to a constant amplitude 50 Hz analog sine wave. The output of the D to A converter 161 is fed to a driver 162 for amplification; and the amplified output is fed to the piezoelectric transducer 12 for vibrationally modulating element 16 of the beam rotator 10.

The programmed divider 146 also supplies a pitch/yaw beam signal to a tone generator 148 which provides 51 steps of pulse rates to a selected laser/driver over separate ranges for each respective pitch or yaw beam transmission. An electronic switch 152 is controlled by the output of the programmed divider 146 to select the desired laser/driver size format which receives the tone generator output.

It is apparent that many modifications and variations may be effected without departing from the scope of the novel concepts of this invention.

## Claims

1. A projector for projecting electromagnetic control signals comprising:
   a source of electromagnetic radiation controllable to emit a generally rectangular cross-sectional beam;
   a scanner located to receive said emitted radiation and to scan said radiation over a predetermined angle in a direction orthogonal to the length dimension of said beam cross-section;
   a fixed lens optical system located to receive said scanned radiation and to project said emitted radiation in alternate first and second scanned beams having their respective cross-sectional length dimensions orthogonally oriented with respect to each other;
   a modulator for pulse modulating said source of radiation at a plurality of pulse rates over first and second ranges of frequencies corresponding to said first and second scanned beams;
   a scan circuit associated with said scanner for controlling the angle of scan in accordance with a predetermined time variable function; and
   means programmed for generating said time variable function and supplying synchronizing signals to said modulator and said scan circuit so that said pulse modulated radiation over said first and second ranges of frequencies occurs within the controlled angle of scan corresponding to respective said first and second projected scanned beams; characterised in that a beam rotator (10) is provided which includes first and second relatively movable prism elements (14, 16), movement of one of said elements with respect to the other of said elements effecting a rotation of the beam (4) in that there is provided means (12) for effecting relative movement of said prism elements (14, 16) between a first state where said prism elements (14, 16) are evenly separated over opposing major optical transmitting faces and a second state where said prism elements (14, 16) are in optical contact along said opposite major faces; and in that circuitry is provided for driving said movement effecting means at a frequency corresponding to said scan frequency.

2. A projector according to claim 1, characterised in that said first and second prism elements (14, 16) form a Pechan prism when said second prism element (16) is in said first state for rotating said incoming beam and forms a non-rotating transmission block when said second prism element (16) is in said second state.

3. A projector according to claim 2, characterised in that said formed Pechan prism has a reversion axis oriented at an angle of 45° with respect to the length of said rectangular cross-sectional beam (4).

4. A projector for projecting remote control signals which includes:

means for selectively generating a beam of electromagnetic radiation having a generally rectangular cross-sectional area;

means located to receive said beam of radiation for scanning said beam over at least one predetermined path orthogonal to the length of said beam cross-section; and

means located in the path of said scan beam for projecting said beam as two alternately scanned beams having said cross-sectional length dimensions orthogonally oriented with respect to each other; characterised in that there are provided

first and second prism elements (14, 16), within said projecting means, wherein said first prism element (14) receives and transmits said scanned beam (4) and said second prism element (16) receives and transmits said beam from said first prism element (14);

means for mounting said first and second prism elements (14, 16) for relative movement with respect to each other; and

a transducer element (12) on said mounting means (18) for effecting said relative movement of said prism elements (14, 16) between a first position where said prism elements are separated along said beam path and a second position where said prism elements are in optical contact.

5. A projector according to claim 5, characterised in that said first and second prism elements (14, 16) form a Pechan prism when said prism elements (14, 16) are in said first position and said Pechan prism has a reversion axis oriented 45° with respect to the length of said rectangular cross-sectional beam to effect 90° rotation of said beam cross-section.

6. A projector according to claim 5, further including means (160, 161, 162) for driving said transducer element (12) at a constant amplitude predetermined frequency.

7. A projector according to claim 6, wherein said means for projecting said beam as two alternately scanned beams includes a rotatable dither mirror, and a galvanometer for rotating the dither mirror, characterised in that a drive circuit (150, 154, 156) for controlling said galvanometer (7) is provided which is arranged to effect rotation of said dither mirror through a variable angle at a fixed frequency which corresponds to said predetermined frequency at which said transducer element (12) is driven.

**Revendications**

1. Un projecteur pour projeter des signaux de commande électromagnétiques comprenant:

une source de rayonnement électromagnétique contrôlable pour émettre un faisceau de section droite généralement rectangulaire;

un moyen de balayage placé pour recevoir ledit rayonnement émis et pour balayer ledit rayonnement sur un angle prédéterminé dans une direction perpendiculaire à la dimension longitudinale de la section droite dudit faisceau;

un système optique à objectif fixe placé pour recevoir ledit rayonnement balayé et pour projeter ledit rayonnement émis alternativement suivant un premier et un deuxième faisceau balayé dont les dimensions longitudinales en section droite respectives sont perpendiculairement orientées l'une par rapport à l'autre;

un modulateur pour moduler en impulsion ladite source de rayonnement à plusieurs taux d'impulsion sur une première et une deuxième gamme de fréquences correspondant auxdits premier et deuxième faisceaux balayés;

un circuit de balayage associé audit moyen de balayage pour commander l'angle de balayage selon une fonction variable du temps prédéterminée; et

un moyen programmé pour produire ladite fonction variable du temps et délivrer des signaux de synchronisation audit modulateur et audit circuit de balayage de façon que ledit rayonnement modulé en impulsion sur lesdites première et deuxième gammes de fréquences se produise à l'intérieur de l'angle commandé de balayage correspondant auxdits premier et deuxième faisceaux balayés projetés respectifs; caractérisé en ce qu'un moyen (10) de rotation de faisceau est prévu qui comporte un premier et un deuxième élément de prisme relativement mobiles (14, 16), le mouvement de l'un desdits éléments par rapport à l'autre desdits éléments réalisant une rotation du faisceau (4) en ce qu'il est prévu un moyen (12) pour réaliser le mouvement relatif desdits éléments de prisme (14, 16) entre un premier état où lesdits éléments de prisme (14, 16) sont également séparés suivant des faces de transmission optique principales en regard et un deuxième état où lesdits éléments de prisme (14, 16) sont en contact optique suivant lesdites faces principales en regard; et en ce qu'un circuit est prévu pour commander ledit moyen réalisant le mouvement à une fréquence correspondant à ladite fréquence de balayage.

2. Un projecteur selon la revendication 1, caractérisé en ce que lesdits premier et deuxième éléments de prisme (14, 16) forment un prisme de Pechan lorsque ledit deuxième élément de prisme (16) est dans ledit premier état pour faire tourner ledit faisceau entrant et forme un bloc de transmission non tournant lorsque ledit deuxième élément de prisme (16) est dans ledit deuxième état.

3. Un projecteur selon la revendication 2, caractérisé en ce que ledit prisme de Pechan formé a un axe d'inversion orienté suivant un angle de 45° par rapport à la longueur dudit faisceau à section droite rectangulaire (4).

4. Un projecteur pour projeter des signaux de commande éloignés qui comporte:

un moyen pour produire sélectivement un faisceau de rayonnement électromagnétique ayant une aire de section droite généralement rectangulaire;

un moyen disposé afin de recevoir ledit faisceau de rayonnement pour balayer ledit faisceau sur au moins une trajectoire prédéterminée perpendiculaire à la longueur de ladite section droite de faisceau; et

un moyen disposé sur la trajectoire dudit faisceau de balayage pour projeter ledit faisceau sous forme de deux faisceaux alternativement balayés ayant des dimensions longitudinales en section droite qui sont perpendiculairement orientées l'une par rapport à l'autre; caractérisé en ce qu'il est prévu;

un premier et un deuxième élément de prisme (14, 16), à l'intérieur dudit moyen de projection, où ledit premier élément de prisme (14) reçoit et transmet ledit faisceau balayé (4) et ledit deuxième élément de prisme (16) reçoit et transmet ledit faisceau venant dudit premier élément de prisme (14);

un moyen pour monter lesdits premier et deuxième éléments de prisme (14, 16) pour un mouvement relatif de l'un par rapport à l'autre; et

un élément transducteur (12) sur ledit moyen de montage (18) pour réaliser ledit mouvement relatif desdits éléments de prisme (14, 16) entre une première position où lesdits éléments de prisme sont séparés suivant ladite trajectoire de faisceau et une deuxième position où lesdits éléments de prisme sont en contact optique.

5. Un projecteur selon la revendication 1, caractérisé en ce que lesdits premier et deuxième éléments de prisme (14, 16) forment un prisme de Pechan lorsque lesdits éléments de prisme (14, 16) sont dans ladite première position et ledit prisme de Pechan a un axe d'inversion orienté à 45° par rapport à la longueur dudit faisceau à section droite rectangulaire pour réaliser une rotation de 90° de ladite section droite du faisceau.

6. Un projecteur selon la revendication 5, comprenant en outre un moyen (160, 161, 162) pour exciter ledit élément transducteur (12) à une fréquence prédéterminée d'amplitude constante.

7. Un projecteur selon la revendication 6, où ledit moyen pour projeter ledit faisceau sous forme de deux faisceaux alternativement balayés comporte un miroir oscillant pouvant tourner, et un galvanomètre pour faire tourner le miroir oscillant, caractérisé en ce qu'un circuit d'excitation (150, 154, 156) pour commander ledit galvanomètre (16) est prévu qui est agencé pour réaliser la rotation dudit miroir oscillant sur un angle variable à une fréquence fixe qui correspond à ladite fréquence prédéterminée à laquelle ledit élément transducteur (12) est excité.

**Patentansprüche**

1. Ein Projektor zum Projizieren elektromagnetischer Steuersignale, der aufweist:

eine Quelle elektromagnetischer Strahlung, die steuerbar ist, um einen Strahl mit im wesentlichen rechtwinkeligem Querschnitt auszusenden;

eine Abtasteinrichtung, die angeordnet ist, um die ausgesendete Strahlung zu empfangen und um die Strahlung über einen vorbestimmten Winkel ın einer Richtung senkrecht zu der Längenabmessung des Strahlquerschnittes abzutasten;

ein befestigtes optisches Linsensystem, das angeordnet ist, um die abgetastete Strahlung zu empfangen und um die ausgesendete Strahlung in wechselweisen ersten und zweiten abgetasteten Strahlen zu projizieren, die ihre jeweiligen Querschnitts-Längenabmessungen in senkrechter Richtung zueinander ausgerichtet haben;

ein Modulator zum Pulsmodulieren der Strahlungsquelle mit einer Vielzahl von Pulsraten über erste und zweite Frequenzbereiche, die den ersten und zweiten abgetasteten Strahlen entsprechen;

eine Abtastschaltung, die der Abtasteinrichtung zugeordnet ist, um den Abtastwinkel in Übereinstimmung mit einer vorbestimmten zeitveränderlichen Funktion zu steuern; und

eine programmierte Einrichtung zum Erzeugen der zeitveränderlichen Funktion und zum Liefern eines synchronisierenden Signals an den Modulator und an die Abtastschaltung, so daß die pulsmodulierte Strahlung über die ersten und zweiten Frequenzbereiche innerhalb des gesteuerten Abtastwinkels entsprechend der jeweiligen ersten und zweiten projizierten Abtaststrahlen auftreten; dadurch gekennzeichnet, daß eine Strahldreheinrichtung (10) vorgesehen ist, die erste und zweite relativ zueinander bewegliche Prismenelemente (14, 16) aufweist, wobei die Bewegung von einem der Elemente bezüglich des anderen der Elemente eine Drehung des Strahles (4) hervorruft, daß eine Einrichtung (12) zum Hervorrufen einer relativen Bewegung der Prismenelemente (14, 16) zwischen einem ersten Zustand, in dem die Prismenelemente (14, 16) gleichmäßig über einander gegenüberliegende größere optische Übertragungsflächen beabstandet sind, und einem zweiten Zustand, in dem die Prismenelemente (14, 16) in optischem Kontakt längs der einander gegenüberliegenden größeren Flächen sind, vorgesehen ist; und daß ein Schaltkreis vorgesehen ist, um die die Bewegung hervorrufende Einrichtung mit einer Frequenz anzutreiben, die der Abtastfrequenz entspricht.

2. Ein Projektor nach Anspruch 1, dadurch gekennzeichnet, daß die ersten und zweiten Prismenelemente (14, 16) ein Pechan-Prisma bilden, wenn das zweite Prismenelement (16) in dem ersten Zustand zum Drehen des hereinkommenden Strahles ist und einen nicht drehenden Übertragungsblock bildet, wenn das zweite Prismenelement (16) in dem zweiten Zustand ist.

3. Ein Projektor nach Anspruch 2, dadurch gekennzeichnet daß das gebildete Pechan-Prisma eine Umlenkachse hat, die in einem Winkel von 45° bezüglich der Länge des rechtwinkeligen Querschnittes des Strahles (4) liegt.

4. Ein Projektor zum Projizieren von Fernsteuersignalen, der aufweist:

eine Einrichtung zum wahlweisen Erzeugen eines Strahls von elektromagnetischer Strahlung mit einer im wesentlichen rechteckigen Querschnittsfläche;

eine Einrichtung, die angeordnet ist, um den Strahl von Strahlung zum Abtasten des Strahls-über wenigstens einen vorbestimmten Weg senkrecht zu der Länge des Strahlquerschnittes zu empfangen; und

eine in dem Weg des Abtaststrahls angeordnete Einrichtung zum Projizieren des Strahles als zwei wahlweise abgetastete Strahlen mit senkrecht zueinander ausgerichteten Querschnittslängenabmessungen; gekennzeichnet durch

erste und zweite Prismenelemente (14, 16) innerhalb der Projektionseinrichtung, wobei das erste Prismenelement (14) den abgetasteten Strahl (4) empfängt und überträgt und wobei das zweite Prismenelement (16) den Strahl vom ersten Prismenelement (14) empfängt und überträgt;

eine Einrichtung zum Befestigen des ersten und zweiten Prismenelements (14, 16) für eine jeweils zueinander relative Bewegung; und

eine Übertragungselement (12) auf der Befestigungseinrichtung (18) zum Hervorrufen der relativen Bewegung der Prismenelemente (14, 16) zwischen einer ersten Stellung, in der die Prismenelemente voneinander getrennt sind und einer zweiten Stellung, in der die Prismenelemente miteinander in optischem Kontakt stehen.

5. Ein Projektor nach Anspruch 5, dadurch gekennzeichnet, daß die ersten und zweiten Prismenelemente (14, 16) ein Pechan-Prisma bilden, wenn die Prismenelemente (14, 16) in der ersten Stellung sind und das Pechan-Prisma eine Umlenkachse hat, die in einem Winkel von 45° bezüglich der Länge des rechtwinkeligen Strahlquerschnittes ausgerichtet ist, um eine 90° Drehung des Strahlquerschnittes hervorzurufen.

6. Ein Projektor nach Anspruch 5, ferner mit einer Einrichtung (160, 161, 162) zum Antreiben des Übertragungselementes (12) mit einer konstanten Amplitude vorbestimmter Frequenz.

7. Ein Projektor nach Anspruch 6, in dem die Einrichtung zum Projizieren des Strahls als zwei wahlweise abgetastete Strahlen einen drehbaren schnell beweglichen Spiegel aufweist, und ein Galvanometer zum Drehen des schnell beweglichen Spiegels, dadurch gekennzeichnet, daß eine Antriebsschaltung (150, 154, 156) zum Steuern des Galvanometers (7) vorgesehen ist, die angeordnet ist, um eine Drehung des schnell beweglichen Spiegels über einen veränderlichen Winkel bei einer festen Frequenz, die der vorbestimmten Frequenz, mit der das Übertragungselement (12) angetrieben ist, entspricht, zu bewirken.

FIG. 1.

FIG. 2.

FIG. 3.

FIG.4A.

FIG.4B.

FIG.4C.

FIG. 5.